Europäisches Patentamt

European Patent Office

Office européen des brevets

(19)

(11) Veröffentlichungsnummer: **0 353 312**

**A2**

# (12) EUROPÄISCHE PATENTANMELDUNG

(21) Anmeldenummer: 87114726.0

(22) Anmeldetag: 08.10.87

(51) Int. Cl.⁴: **B01D 46/02**

(30) Priorität: 20.11.86 DE 3639662

(43) Veröffentlichungstag der Anmeldung:
07.02.90 Patentblatt 90/06

(84) Benannte Vertragsstaaten:
**AT BE CH DE FR GB LI NL SE**

(71) Anmelder: **Hilgers AG**
**Hilgersstrasse**
**D-5456 Rheinbrohl(DE)**

(72) Erfinder: **Wesselmann, Ulrich**
**Hammer Strasse 40**
**D-4400 Münster(DE)**
Erfinder: **Gründken,Uwe**
**Weseler Strasse 27**
**D-4405 Nottuln(DE)**

(74) Vertreter: **Patentanwaltsbüro Cohausz &**
**Florack**
**Postfach 14 01 20 Schumannstrasse 97**
**D-4000 Düsseldorf 1(DE)**

(54) **Stützkorb für Filterschläuche.**

(57) Die Erfindung betrifft einen Stützkorb 1 für Filterschläuche 4, welche mit dem Rand 5 ihres offenen
Endes mittels eines sogenannten Schnappringes in
Öffnungen der den Reingasraum 11 vom Rohgasraum 10 trennenden Zwischenwand 9 einsetzbar
sind. In Höhe der Zwischenwand weist der Stützkorb
1 eine Einschnürung 12 auf, die so bemessen ist,
daß sie ein Eindrücken des als Schnappring ausgebildeten Randes 5 des Filterschlauches 4 bei eingesetztem Stützkorb und so den leichten Ein- und
Ausbau desselben und des Schlauches ermöglicht.

EP 0 353 312 A2

## Stützkorb für Filterschläuche

Die Efindung betrifft einen aus im Kreis angeordneten Längsstäben und diese miteinander verbindenden, über die Länge der Längsstäbe verteilten Ringen bestehenden Stützkorb für von außen nach innen beaufschlagte Filterschläuche, welche mit dem Rand ihres offenen Endes mittels eines in diesen Rand eingearbeiteten aussteifenden federnden Ringes und eines oder zweier außen auf diesem Rand vorgesehener Wülste in Öffnungen der den Reingasraum vom Rohgasraum trennenden Zwischenwand einsetzbar sind. Die Ringe des Stützkorbes, welche auch sternförmig sein können, sind mit den Längsstäben verschweißt.

Der Stützkorb weist im allgemeinen eine größere Länge als der Filterschlauch auf und ragt daher bei in das Filtergehäuse eingesetztem Filterschlauch nach oben aus dem Filterschlauch heraus und damit auch über die Zwischenwand nach oben, wo er an der Zwischenwand befestigt oder an einem anderen festen Teil des Filtergehäuses abgestützt wird, damit der Filterschlauch gestreckt gehalten wird. Gegebenenfalls trägt er auch ein Düsenrohr, durch das die Rückspülgase in den Filterschlauch geleitet werden oder stützt sich gegen ein solches nach unten ab. Solche Stützkörbe sind beispielsweise aus der DE-AS 25 51 866 sowie aus den DE-OSen 30 04 222 und 31 28 609 bekannt.

Bei den bekannten Anordnungen ist nachteilig, daß die Stützkörbe erst nach dem Einsetzen de Filterschläuche in die Öffnungen der Zwischenwand eingebaut werden können und vor dem Herausnehmen der Filterschläuche aus diesen Öffnungen aus den Filterschläuchen herausgezogen werden müssen. Denn für das Einsetzen und Herausnehmen der Filterschläuche muß der Schnappring einseitig stark eingedrückt werden, so daß eine nierenartige Form des Schnappringes entsteht. Hierzu ist aber der Stützkorb in jedem Falle im Wege. Für das Ein- und Ausbauen der Stützkörbe muß außerdem oberhalb der Zwischenwand genügend Raum vorhanden sein. Hier vorhandene Düsenstücke und Düsenrohre müssen heshalb entfernbar angeordnet sein. Die Montage und das Auswechseln der Schläuche ist daher sehr aufwendig. Oft ist oberhalb der Zwischenwand der erforderliche Raum nicht vorhanden.

Außerdem ist es oft schwierig, den Stützkorb aus dem in Benutzung gewesenen und noch an der Zwischenwand hängenden Filterschlauch herauszuziehen, weil er sich in die Lücken des Stützkorbes eingewölbt hat und oftmals durch das ausgefilterte Material verkrustet und versteift worden ist.

Aufgabe der Erfindung ist es, einen Stützkorb vorzuschlagen, der zusammen mit dem Filterschlauch von unten, d. h. von dem Rohgasraum aus, ein- und ausbaubar ist. Dadurch werden die Raumprobleme oberhalb der Zwischenwand umgangen, und das Herausziehen de Stützkörbe aus den Filterschläuchen kann außerhalb des Filtergehäuses vorgenommen werden, was sich dort natürlich wesentlich besser durchführen läßt.

Zur Lösung dieser Aufgabe schlägt die Erfindung vor, daß der Stützkorb in dem Bereich, der sich bei eingebautem Filterschlauch und Stützkorb in Höhe der Zwischenwand befindet, eine Einschnürung oder Öffnung aufweist, oder daß er so ausgebildet ist, daß er in diesem Bereich vorübergehend mit einer Öffnung versehbar ist, wobei die Einschnürung oder Öffnung so bemessen ist, daß sie ein Eindrücken des in der angegebenen Weise als Schnappring ausgebildeten Randes des filterschlauches in dem Maße ermöglicht, wie es für den Ein- bzw. Ausbau des Filterschlauches notwendig ist.

Die Einschnürung wird beispielsweise dadurch hergestellt, daß die Längsstäbe von einer - bezogen auf die Einbaulage des Stützkorbes - etwa sechs Zentimeter unterhalb der Höhe der Zwischenwand liegenden Stelle ab nach innen abgekröpft und danach weiter nach oben geführt sind. Sie geben dadurch, gegebenenfalls auch infolge ihrer Elastizität soviel Raum frei, daß der Schnappring in der beschriebenen Weise verformt werden kann.

Gemäß einer anderen Ausführungsform der Erfindung werden zwei bis vier benachbarte Längsstäbe im Bereich der Zwischenwand bezogen auf die Einbaulage des Stützkorbes auf eine Länge vo etwa 15 cm unterbrochen. Dadurch ergibt sich eine seitliche Öffnung des Stützkorbes, die wiederum die für das Einsetzen oder Ausbauen des Filterschlauches erforderliche Verformung des Schnapringes ermöglicht. Die übrigen, nicht unterbrochenen Längsstäbe des Stützkorbes genügen im algemeinen für die Aufrechterhaltung der Stabilität des Stützkorbes, doch kann man sie auch etwas stärker wählen, wenn dies notwendig erscheint. Die unterbrochenen Längsstäbe werden vorteilhafterweise an ihren der Unterbrechung zugewendeten Enden durch Ringe und den übrigen Längsstäben verbunden.

Weist der Stützkorb beispielsweise acht Längsstäbe auf, so genügt es, zwei benachbarte Längsstäbe zu unterbrechen und die beiden den unterbrochenen Längsstäben benachbarten Längsstäbe im Bereich der Unterbrechungen der erstgenannten Längsstäbe in Richtung auf die weiter benachbarten Längsstäbe bogenförmig auszubuchten und die Ausbuchtungen in ihren Scheitelpunkten mit jenen Längsstäben zu verbinden. Alle diese Verbindungen erfolgen in üblicher Weise durch Verschweißen.

Schließlich ist es auch möglich, den für das Verformen des Schnappringes erforderlichen Freiraum dadurch zu erhalten, daß die Längsstäbe bezogen auf die Einbaulage des Stützkorbes etwa 10 cm unterhalb der Höhe der Zwischenwand in bekannter Weise eine Trennstelle aufweisen, so daß der obere, nach oben aus dem Filterschlauch herausragende Teil des Stützkorbes erst nach dem Einbau des als Schnappring ausgebildeten Randes des Filterschlauchs in die Öffnung der Zwischenwand an den im Filterschlauch befindlichen Teil des Stützkorbes angesteckt bzw. vor dem Ausbau des Filterschlauchs aus der Zwischenwand von dem im Filterschlauch befindlichen unteren Teil des Stützkorbes abgezogen werden kann und dadurch das Eindrücken des Filterschlauchrandes ermöglicht.

Das Einsetzen des oberen Teils des Stützkorbes von oben her und das Herausnehmen nach oben ist problemlos, weil es sich dabei um einen relativ kurzen Teil des Stützkorbes handelt. Dagegen kann der untere Teil zusammen mit dem Filterschlauch wie bei den vorerwähnten Ausführungsbeispielen nach unten ausgebaut werden.

Es ist aber zu erwähnen, daß der Ausbau der Filterschläuche zusammen mit den Stützkörben bei allen Ausführungsbeispielen auch nach oben möglich ist, wenn ein Ausbau nach unten aus irgendwelchen Gründen nicht in Betracht kommt.

In der Zeichnung ist die Erfindung an Hand von drei Ausführungsbeispielen veranschaulicht, wobei jeweils nur der obere Teil der Filterschläuche und der in sie eingesetzten Stützkörbe zusammen mit der Zwischenwand des Filtergehäuses dargestellt sind.

In allen Ausführungsbeispielen ist der Stützkorb insge samt mit 1 bezeichnet. Er besteht in üblicher Weise aus Längsstäben 2 und Ringen 3, die untereinander verschweißt sind. Der Stützkorb gibt dem Filterschlauch 4, in den er eingesetzt ist, einen Halt gegen den von außen nach innen gerichteten Strom der zu reinigenden Gase. Er weist an seinem oberen, offenen Ende einen durch eine federnde Einlage verstärkten, als sogenannten Schnappring ausgebildeten Rand 5 auf, der auf seiner Außenseite mit zwei Wülsten 6, 7 versehen ist, mit denen er in einer Öffnung 8 der Zwischenwand 9 festgelegt ist, die den Rohgasraum 10 von dem Reingasraum 11 trennt. Das Einbringen in diese Öffnung erfolgt dadurch, daß der Rand 5 einseitig zu einer nierenförmigen Gestalt eingedrückt wird. Er läßt sich dann in die Öffnung 8 einbringen und schnappt infolge der durch die federnde Einlage gegebenen Elastizität in die dargestellte Lage.

Für das seitliche Eindrücken des Randes 5 des Filterschlauchs 4 wird innerhalb des Schlauches im Bereich der Zwischenwand 9 ein freier Raum benötigt, der gemäß der der Erfindung zugrundeliegenden Aufgabe auch dann vorhanden sein soll, wenn sich der Stützkorb 1 in dem Filterschlauch 4 befindet.

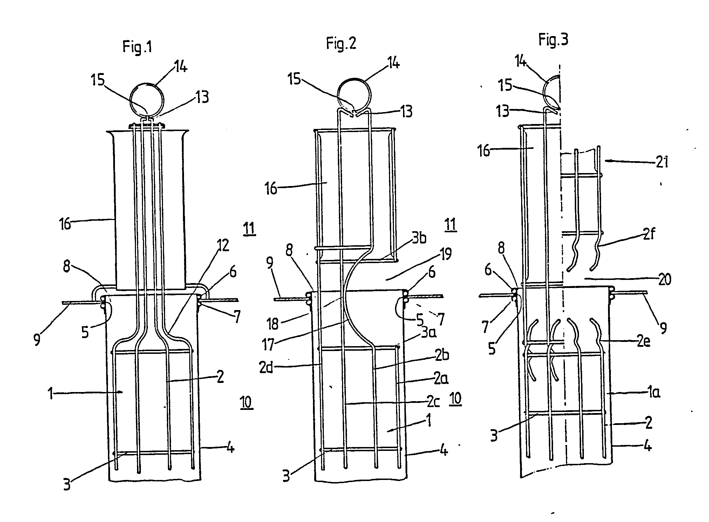

Dies wird bei dem in Fig. 1 dargestellten Ausführungsbeispiel dadurch erreicht, daß der Stützkorb 1 im Bereich der Zwischenwand 9 durch Nachinnenkröpfen der Längsstäbe 2 eine starke Einschnürung 12 aufweist. Oberhalb dieser Einschnürung sind die Längsstäbe noch ein Stück weitergeführt und weisen zum Teil an ihrem Ende eine seitliche Abbiegung 13 auf, mit der sie sich von unten gegen ein Rückspülrohr 14 anlegen, aus dessen Düse 15 die Rückspülgase periodisch austreten. Zur Führung dieser Gase zum Filterschlauch 4, kann an de oberen Teil des Stützkorbs 1 ein Düsenrohr 16 angeordnet sein.

Bei dem in Fig. 2 dargestellten Ausführungsbeispiel ist der Stützkorb 1 über den Höhenbereich der Zwischenwand 9 hinaus ohne Einschnürung der Längsstäbe 2 weitergeführt, doch sind auf der in der Zeichnung rechten Seite zwei Längsstäbe 2a unterbrochen und zwei weitere Längsstäbe 2b in diesem Bereich nach links bogenförmig ausgebuchtet. Diese Bögen 17 sind in ihrem Scheitelpunkt 18 mit den nächstbenachbarten Längsstäben 2c verschweißt. Die infolge der Unterbrechung der Längsstäbe 2a entstehenden freien Enden sind djurch zusätzliche Ringe 3a, 3b mit den übrigen Längsstäben verbunden. Durch die Unterbrechung der Längsstäbe 2a ergibt sich eine seitliche Öffnung 19 des Stützkorbes.

Bei dem in Fig. 3 dargestellten Ausführungsbeispiel sind die Längsstäbe 2 des Stützkorbes 1 in einer etwas unterhalb der Zwischenwand 9 liegenden Höhe unterbrochen und mit einer Steckbverbindung 2e, 2f versehen, wie sie bei sehr langen Filterschläuchen und den für diese vorgesehenen entsprechend langen Stützkorben zwecks Aufteilung in kürzere Teile üblich sind. Hier wird die für das Eindrücken des Randes 5 des Filterschlauches 4 benötigt Öffnung 19 dadurch geschaffen, daß der Filterschlauch 4 zusammen nur mit dem unteren Teil 1a des Stützkorbes 1 in die Zwischenwand 9 eingesetzt wird (rechte Hälfte der Fig. 3) und dan erst der obere Teil 21 von oben her an den untern Teil 1a angesteckt wird, wie dies auf der linken Hälfte der Fig. 3 dargestellt wird. Der Ausbau des Filterschlauchs 4 erfolgt in umgekehrter Reihenfolge.

## Ansprüche

1. Stützkorb, bestehend aus im Kreis angeordneten Längsstäben und diese miteinander verbindenden, über die Länge der Längsstäbe verteilten Ringen, für Filterschläuche, welche mit dem Rand ihres offenen Endes mittels eines in diesen Rand eingearbeiteten aussteifenden federnden Ringes und eines oder zweier außen auf diesem Rand vorgesehener Wülste in Öffnungen der den Reingasraum vom Rohgasraum trennenden Zwischenwand einsetzbar sind, dadurch gekennzeichnet, daß der Stützkorb (1) in dem Bereich, der sich bei eingebautem Filterschlauch und Stützkorb in Höhe der Zwischenwand (9) befindet, eine Einschnürung (12) oder Öffnung (19) aufweist, oder daß er so ausgebildet ist, daß er in diesem Bereich vorübergehend mit einer Öffnung (20) versehbar ist, wobei die Einschnürung oder Öffnung so bemessen ist, daß sie ein Eindrücken des in der engegebenen Weise als Schnappring ausgebildeten Randes (5) des Filterschlauches (4) in dem Maße ermöglicht, wie es für den Ein-bzw. Ausbau des Filterschlauches notwendig ist.

2. Stützkorb nach Anspruch 1, dadurch gekennziechnet, daß die Längsstäbe (2) von einer - bezogen auf die Einbaulage des Stützkorbes - etwa sechs Zentimeter unter halb der Höhe der Zwischenwand (9) liegenden Stelle ab nach innen abgekröpft (12) und danach weiter nach oben geführt sind.

3. Stützkorb nach Anspruch 1, dadurch gekennzeichnet, daß zwei bis vier benachbarte Längsstäbe (2a) im Bereich der Zwischenwand (9) - bezogen auf die Einbaulage des Stützkorbes - auf eine Länge von etwa fünfzehn Zentimetern unterbrochen sind.

4. Stützkorb nach Anspruch 3, dadurch gekennzeichnet, daß die unterbrochenen Längsstäbe (2a) an den ihrer Unterbrechung zugwendeten Enden durch Ringe (3a, 3b) mit den übrigen Längsstäben (2b, 2c, 2d) verbunden sind.

5. Stützkorb nach Anspruch 3, dadurch gekennzeichnet, daß bei Vorhandensein von acht Längsstäben (2) zwei benachbarte Längsstäbe (2a) unterbrochen sind und die beiden den unterbrochenen Längsstäben benachbarten Längsstäbe (2b) im Bereich der Unterbrechungen der erstgenannten Längsstäbe (2a) in Richtung auf die weiter benachbarten Längsstäbe (2c) bogenförmige Ausbuchtungen (17) aufweisen, die in ihren Scheitelpunkten (18) mit jenen Längsstäben (2c) verbunden sind.

6. Stützkorb nach Anspruch 1, dadurch gekennzeichnet, daß die Längsstäbe (2) etwa zehn Zentimeter unterhalb der Höhe der Zwischenwand (9) - bezogen auf die Einbaulage des Stützkorbes - in bekanter Weise eine Trennstelle (2e, 2f) aufweisen, so daß der obere, nach oben aus dem Filterschlauch (4) herausragende Teil (1b) des Stützkorbes (1) erst nach dem Einbau des als Schnappring ausgebildeten Randes (5) des Filterschlauchs (4) in die Öffnung der Zwischenwand (9) an den im Filterschlauch befindlichen Teil (1a) des Stützkorbes angesteckt bzw. vor dem Ausbau des Filterschlauchs (4) aus der Zwischenwand (9) von dem im filterschlauch befindlichen unteren Teil (1a) des Stützkorbes abgezogen werden kann und dadurch das Eindrücken des Filterschlauchrandes (5) ermöglicht.

Fig.1  Fig.2  Fig.3